# EUROPÄISCHE PATENTSCHRIFT

(11) **EP 3 319 887 B1**
(45) Veröffentlichungstag und Bekanntmachung des Hinweises auf die Patenterteilung: **25.12.2019**
(21) Anmeldenummer: 16733052.1
(22) Anmeldetag: 24.06.2016
(51) Int. Cl.: B65D 88/66

(54) **VORRICHTUNG FÜR KONGLOMERIERENDE SCHÜTTGÜTER**
DEVICE FOR CONGLOMERATING BULK MATERIALS
DISPOSITIF POUR PRODUITS EN VRAC AYANT TENDANCE À S'AGGLOMÉRER

(30) Priorität: 07.07.2015 DE 102015212677
(43) Veröffentlichungstag der Anmeldung: 16.05.2018
(73) Patentinhaber: Benninghoven GmbH & Co. KG, 54516 Wittlich (DE)
(72) Erfinder: WAGNER, Frank, 54492 Zeltingen-Rachtig (DE)
(74) Vertreter: Rau, Schneck & Hübner Patentanwälte Rechtsanwälte PartGmbB
(86) Internationale Anmeldenummer: PCT/EP2016/064694
(87) Internationale Veröffentlichungsnummer: WO 2017/005510

(56) Entgegenhaltungen:
- DE-A1- 2 703 458
- DE-A1- 4 014 462
- DE-B3-102010 061 155
- DE-U- 1 892 574
- DE-U1-202008 016 904
- FR-A1- 2 083 472
- FR-A1- 2 588 836
- FR-A1- 2 637 270
- US-A- 1 842 232
- US-A- 1 942 581
- US-A- 4 669 638
- US-A1- 2004 042 335

## Beschreibung

Die Erfindung betrifft eine Vorrichtung für konglomerierende Schüttgüter nach dem Oberbegriff des Anspruchs 1.

Als konglomerierende Schüttgüter werden solche verstanden, deren Schüttgutpartikel aneinander und/oder an Handhabungseinrichtungen wie Behältern, Fördereinrichtungen und/oder Abgabeeinrichtungen in Form von Doseuren, verkleben. Konglomerierende Schüttgüter in diesem Sinne sind beispielsweise Granulate für die Asphaltherstellung, beispielsweise Altasphaltgranulat und/oder Weißmineral. Die Handhabung und Weiterverarbeitung derartiger Schüttgüter ist problematisch, da der Schüttgutstrom blockiert sein kann. Die Handhabung und Weiterverarbeitung komglomerierender Schüttgüter kann unterbrochen werden.

Die FR 2 637 270 A1 offenbart eine Vorrichtung für konglomerierende Schüttguter nach dem Oberbegriff des Anspruchs 1. Weitere Vorrichtungen für konglomerierende Schüttgüter sind insbesondere aus der US 4,669,638 A, der FR 2 083 472 A3, der DE 27 03 458 A1, der DE 18 92 574 U, der US 1,842,232 A, der FR 2 588 836 A1, der DE 20 2008 016 904 U1, der US 1,942,581 A, der DE 10 2010 061 155 B3, der DE 40 14 462 A1 sowie der US 2004/042335 A1 bekannt.

Der Erfindung liegt die Aufgabe zugrunde, die Handhabung konglomerierender Schüttgüter zu verbessern.

Die Aufgabe wird durch die Merkmale des Anspruchs 1 gelöst. Der Kern der Erfindung besteht darin, das Schüttgut, das in einem Behälter bevorratet und aus diesem Behälter über eine Abgabeöffnung abgegeben werden kann, mit einem Entlastungselement zu entlasten. Das Konglomerieren des Schüttguts in dem Behälter stellt an sich keinen Nachteil dar, da mit dem Entlastungselement, das mit einem Antrieb verbunden ist, das abzugebende Schüttgut von einer konglomerierten Masse gelöst werden kann. Dadurch ist ein steter Schüttgutstrom aus dem Behälter gewährleistet. Eine unbeabsichtigte Blockade des Schüttgutstroms, die zu einem Stillstand der Handhabung und Weiterverarbeitung des Schüttguts führen könnte, ist vermieden. Die erfindungsgemäße Vorrichtung garantiert die Handhabung und Weiterverarbeitung konglomerierender Schüttgüter mit hoher Zuverlässigkeit.

Eine Vorrichtung, bei der die Abgabeöffnung genau so groß ist wie eine Grundfläche des Behälters, reduziert das Risiko eines unerwünschten Anhaftens des Schüttguts am Behälterboden. Ein Behälterboden ist an sich nicht vorhanden.

Gemäß einer nicht-erfindungsgemäßen Ausführungsform ist es möglich, dass der Behälter in einem unteren, der Abgabeöffnung zugewandten Abschnitt einen leicht konischen Verlauf aufweist, so dass die Abgabeöffnung an einem unteren Ende des trichterartigen konischen Abschnitts angeordnet ist. Die Fläche der Abgabeöffnung entspricht dann im Wesentlichen der Grundfläche des Behälters. Insbesondere ist die Fläche der Abgabeöffnung mindestens 80% so groß wie die Grundfläche des Behälters, insbesondere mindestens 90% und insbesondere mindestens 95%.

Eine Vorrichtung, bei der das Entlastungselement mit mindestens einem Aufhängungselement elastisch mit dem Behälter verbunden ist, gewährleistet eine vorteilhafte Betätigung des Entlastungselements. Insbesondere ist das Entlastungselement mit zwei elastischen Aufhängungselementen an einer Innenseite des Behälters befestigt.

Eine Vorrichtung, bei der das Entlastungselement balkenförmig ausgeführt ist, ermöglicht eine verbesserte Entlastung. Entlastung bedeutet, dass konglomeriertes Schüttgut gelöst, also freigeschnitten, wird. Insbesondere ist das Entlastungselement mit einer Balkenlängsachse parallel zu der Abgabeöffnung angeordnet.

Eine Vorrichtung, bei der das Entlastungselement einen offenen Profilquerschnitt aufweist, der senkrecht zur Balkenlängsachse insbesondere als ein der Abgabeöffnung geöffnetes V ausgeführt ist, weist eine verbesserte Entlastungswirkung auf. Das Entlastungselement ist mit der Spitze des V der Abgabeöffnung abgewandt. Eine Bewegung des Entlastungselements nach oben ermöglicht ein Trennen von Materialbrückenbildungen des konglomerierten Schüttguts. Das verklebte Schüttgut wird aufgeschnitten. Die Spitze des V schneidet wie ein Messer das verklebte Schüttgut auseinander. Bei einer nachfolgenden Bewegung des Entlastungselements nach unten wird das gelöste Schüttgut durch die Abgabeöffnung aus dem Behälter gedrückt. Insbesondere ist das Entlastungselement oberhalb der Abgabeöffnung angeordnet. Das Entlastungselement ist insbesondere vorteilhaft gegenüber Austragshilfen wie Vibratoren oder Rüttlern, die zu einer Verdichtung des Schüttguts und deshalb zu einem zusätzlichen Verkleben des Schüttguts führen. Das Entlastungselement weist eine verbesserte Entlastungswirkung auf.

Eine Vorrichtung mit einem Verbindungselement ermöglicht das unmittelbare Verbinden des Antriebs mit dem Entlastungselement. Der Antrieb ist insbesondere außerhalb des Behälters angeordnet. Das Verbindungselement ist insbesondere eine Verbindungsstange, die zur unmittelbaren Übertragung einer Antriebsbewegung auf das Entlastungselement ausgeführt ist.

Eine Vorrichtung, bei der der Antrieb zwei Unwuchtmotoren aufweist, ermöglicht eine unkomplizierte und veränderlich einstellbare Antriebsleistung. Die Unwuchtmotoren sind derart kombiniert und mit dem Entlastungselement gekoppelt, dass das Entlastungselement entlang einer Behälterlängsachse, insbesondere quer und insbesondere senkrecht zu der Balkenlängsachse, vor und zurück verlagert wird. Die beiden Unwuchtmotoren bilden ein geschlossenes System. Die Unwuchtmotoren ermöglichen eine Linearverlagerung des Entlastungselements, wobei die Linearverlagerung insbesondere schwingend, insbesondere periodisch schwingend, ausgeführt ist. Amplitude und Frequenz der Schwingung sind beispielsweise über Unwuchtmasse und Drehzahl der Unwuchtmotoren veränderlich einstellbar. Unwuchtmotoren weisen einen reduzierten mechanischen Aufwand auf. Es ist möglich, andere Motoren einzusetzen, die eine Linearschwingung für eine Auslenkung des Entlastungselements ermöglichen.

Eine Vorrichtung mit einem Füllstandssensor ermöglicht eine Füllstandsüberwachung in dem Behälter. Der Füllstandssensor ist insbesondere innerhalb des Behälters angeordnet und insbesondere als Radarsonde ausgeführt.

Eine Vorrichtung mit einer Fördereinheit zum Abfördern des aus dem Behälter abgegebenen Schüttguts gewährleistet eine kontinuierliche Abfuhr des Schüttguts. Eine Vorrichtung, bei der die Fördereinheit unterhalb der Abgabeöffnung angeordnet ist, gewährleistet eine unkomplizierte Entnahme des Schüttguts aus dem Behälter. Freigegebenes Schüttgut kann selbsttätig in Folge der Schwerkraft aus dem Behälter durch die Abgabeöffnung auf die Fördereinheit gelangen.

Eine Vorrichtung mit einem Abgabensensor ermöglicht das Überwachen der Menge des aus dem Behälter abgegebenen Schüttguts. Der Abgabesensor dient insbesondere zum Erfassen eines Materialmangels, also wenn die abgegebene Menge des Schüttguts einen veränderlich festlegbaren unteren Schwellenwert unterschreitet. Bei Unterschreiten des unteren Schwellenwerts wäre die weitere Handhabung und Weiterverarbeitung des Schüttguts nicht gewährleistet.

Eine Vorrichtung, bei der der Abgabesensor als Schüttgutmangelschalter ausgeführt ist und insbesondere eine um eine Schwenkachse schwenkbare Klappe sowie einen die Klappe erkennenden Näherungsschalter aufweist, gewährleistet die zuverlässige Erkennung eines Schüttgutmangels. Die Ausführung des Schüttgutmangelschalters ist unkompliziert und robust. Der Näherungsschalter ist insbesondere als induktiver Näherungsschalter ausgeführt.

Eine Vorrichtung, bei der der Abgabesensor ein Distanzelement aufweist, verhindert, dass der Näherungsschalter mechanisch beschädigt wird. Das Distanzelement wirkt als mechanischer Anschlagschutz, insbesondere für den Fall, dass die schwenkbare Klappe bei zu geringer Schüttgutmenge in Richtung des Näherungsschalters geschwenkt wird.

Eine Vorrichtung, bei der eine Seitenwand des Behälters in einer Ebene senkrecht zu einer Behälterlängsachse eine knickfreie Kontur aufweist, reduziert die Gefahr unerwünschten Anhaftens des Schüttguts an dem Behälter. Eine knickfreie Kontur der Seitenwand ist beispielsweise durch eine runde, elliptische oder ovale Kontur gegeben. Wesentlich ist, dass die Kontur keine Ecken aufweist und insbesondere nicht polygonal ausgeführt ist. Vorteilhaft ist es ferner, wenn die Kontur des Behälters eine Vorzugsachse aufweist, entlang der das balkenförmige Entlastungselement ausgerichtet ist. Insbesondere sind deshalb ovale oder elliptische Konturen einer kreisförmigen Kontur zu bevorzugen.

Eine Vorrichtung mit einer Regelungseinheit zur geregelten Abgabe von Schüttgut aus dem Behälter ermöglicht einen im Wesentlichen kontinuierlichen Schüttgutstrom aus dem Behälter. Insbesondere ist die Regelungseinheit zur mengengeregelten Abgabe geeignet. Dazu kann die Regelungseinheit mit dem Antrieb und/oder mit dem Abgabesensor in Signalverbindung stehen, um die Antriebsbewegung des Entlastungselements in Abhängigkeit der aus dem Behälter abgegebenen Schüttgutmenge zu beeinflussen.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine Draufsicht auf eine Vorrichtung gemäß der Erfindung,
- Fig. 2: eine vergrößerte Darstellung eines Längsschnitts gemäß Schnittlinie II-II in Fig. 1 und
- Fig. 3: einen Querschnitt gemäß Schnittlinie III-III in Fig. 2.

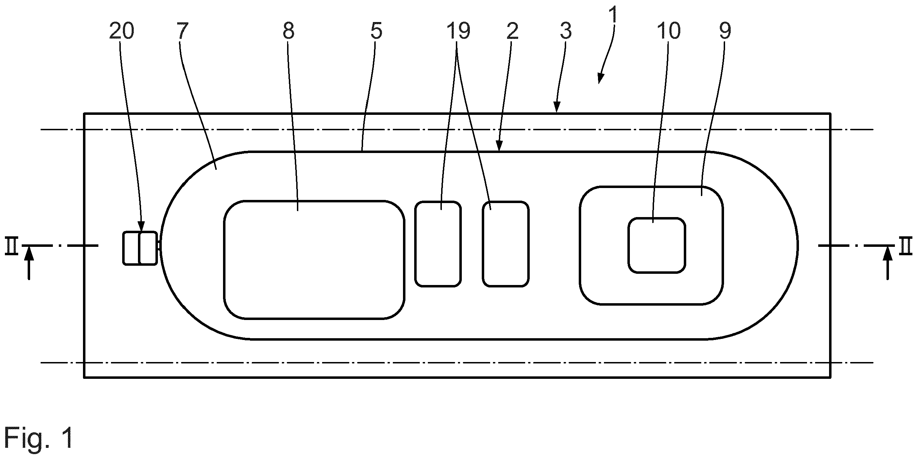

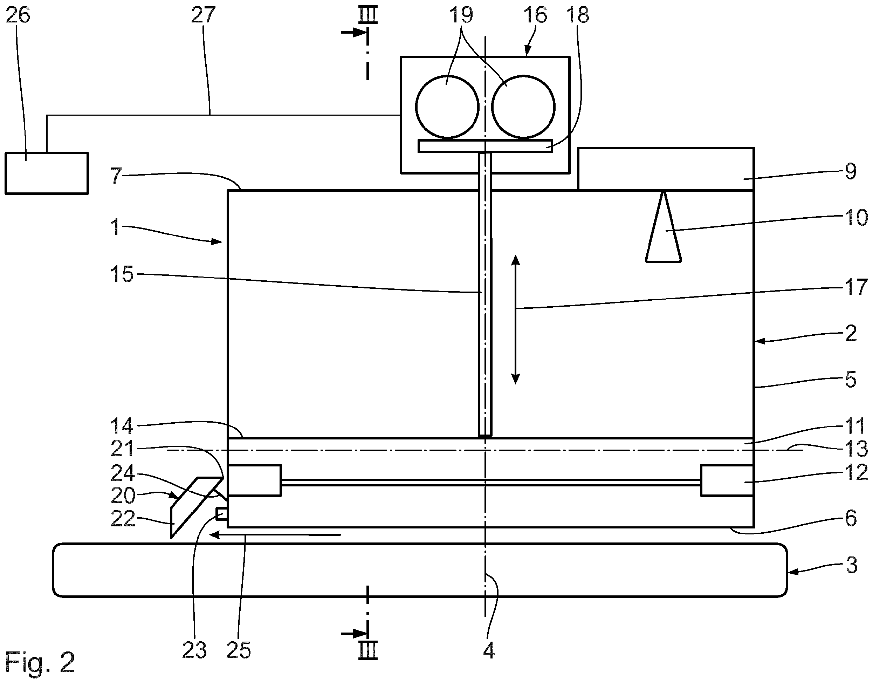

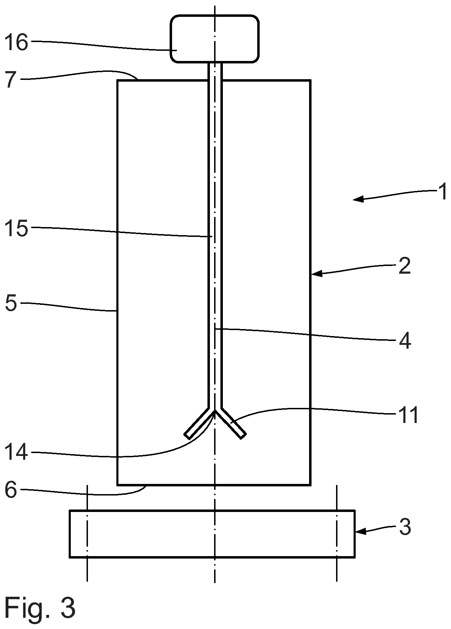

Eine in Fig. 1 bis 3 dargestellte Vorrichtung 1 dient zur Handhabung konglomerierender Schüttgüter, insbesondere von Altasphaltgranulat. Die Vorrichtung 1 ist für Schüttgüter geeignet, die verkleben könnten. Die Vorrichtung 1 umfasst einen Behälter 2 zum Bevorraten des Schüttguts und eine unterhalb des Behälters 2 angeordnete Fördereinheit 3 in Form eines Austragsgurts, der als Wellenkantgurt ausgeführt ist, zum Abfördern des aus dem Behälter 2 abgegebenen Schüttguts. Die Fördereinheit 3 ermöglicht die Abförderung des Schüttguts entlang einer Förderrichtung 25.

Der Behälter 2 weist eine Behälterlängsachse 4 auf, die im Wesentlichen vertikal orientiert ist. Der Behälter 2 weist eine sich entlang der Behälterlängsachse 4 erstreckende Seitenwand 5 auf, die in eine Ebene senkrecht zur der Behälterlängsachse 4 eine knickfreie Kontur in Form eines Ovals aufweist. An einer unteren Stirnseite der Seitenwand 5 ist eine Abgabeöffnung 6 angeordnet, durch die Schüttgut aus dem Behälter 2 auf die Fördereinheit 3 gelangen kann. Gemäß dem gezeigten Ausführungsbeispiel ist die Abgabeöffnung genauso groß wie eine Grundfläche des Behälters 2. Dadurch, dass die Abgabeöffnung 6 genauso groß ausgeführt ist wie die Grundfläche des Behälters 2, ist eine Umlenkung des Schüttguts vermieden. Das Risiko zusätzlicher Anhaftungen an einer Innenfläche des Behälters 2 ist reduziert.

An einer oberen, der Abgabeöffnung 6 gegenüberliegenden Stirnseite der Seitenwand 5 ist ein Behälterdeckel 7 mit einer Befüllöffnung 8 zum Befüllen des Behälters 2 vorgesehen. Ebenfalls an dem Deckel 7 ist eine Wartungsklappe 9 vorgesehen, um die Zugänglichkeit zu einem Füllstandssensor 10, der in Form einer Radarsonde ausgeführt ist, zu gewährleisten.

Innerhalb des Behälters 2 ist ein Entlastungselement 11 in Form eines Entlastungsbalkens vorgesehen. Das Entlastungselement 11 erstreckt sich entlang der Hauptachse der ovalen Kontur der Seitenwand 5. Die Länge des Entlastungselements 11 ist im Wesentlichen identisch mit der Länge des Behälters 2 entlang der Hauptachse. Jeweils stirnseitig ist das balkenförmige Entlastungselement 11 mittels eines elastischen Aufhängungselements 12 an einer Innenfläche der Seitenwand 5 befestigt. Das Entlastungselement 11 ist über die Aufhängungselemente 12 elastisch mit dem Behälter 2 verbunden. Die Aufhängungselemente 12 sind beispielsweise als elastische Gummipuffer ausgeführt.

Das Entlastungselement 11 weist eine Balkenlängsachse 13 auf, die senkrecht zur Behälterlängsachse 4 und parallel zur Abgabeöffnung 6 orientiert ist. In einer Ebene senkrecht zur Balkenlängsachse 13 weist das Entlastungselement 11 einen offenen Profilquerschnitt auf. Der offene Profilquerschnitt ist als ein der Abgabeöffnung 6 geöffnetes V ausgeführt. Die freien Enden der Schenkel des V sind der Abgabeöffnung 6 zugewandt. Das Entlastungselement 11 ist bezogen auf die Behälterlängsachse 4 symmetrisch in dem Behälter 2 angeordnet.

An dem Scheitel 14 des V ist das Entlastungselement 11 mit einem Verbindungselement 15 fest verbunden. Das Verbindungselement 15 ist als Verbindungsstange ausgeführt, die parallel zur Behälterlängsachse 4 orientiert ist. Das Verbindungselement 15 ist nach oben aus dem Behälter 2 durch den Deckel 7 herausgeführt. Auf dem Verbindungselement 15 ist ein Antrieb 16 angeordnet, der eine Linearverlagerung entlang einer Auslenkrichtung 17 des Entlastungselements 11 über das Verbindungselement 15 ermöglicht. Der Antrieb 16 ermöglicht also eine Linearverlagerung entlang der Richtung 17 nach oben und nach unten. Die Auslenkungsrichtung 17 ist parallel zur Behälterlängsachse 4 und senkrecht zur Balkenlängsachse 13 orientiert.

Der Antrieb 16 umfasst eine Halteplatte 18, auf der zwei Unwuchtmotoren 19 angeordnet sind. Die Unwuchtmotoren 19 sind bezüglich der Behälterlängsachse 4 symmetrisch an der Halteplatte 18 angeordnet. Die Unwuchtmotoren 19 bilden ein geschlossenes System. Die Unwuchtmotoren 19 sind identisch ausgeführt. Jeweils an dem Wellenende des Unwuchtmotors 19, der einen zentralen Elektromotor aufweist, sind verstellbare Exzenter angebracht. Die Exzenter können durch eine Abdeckung als Eingreifschutz geschützt sein. Durch das Verstellen des Exzenters kann die Unwuchtleistung des Unwuchtmotors 19 veränderlich eingestellt werden. Die Unwucht selbst wird durch die Drehung der Welle des zentralen Elektromotors erzeugt. Die Unwucht wird als Kreisschwingung bezeichnet. Die Unwuchtmotoren 19 werden gegenläufig angetrieben, so dass sich die beiden gegenläufigen Kreisschwingungen zu einer Linearschwingung addieren.

An der Fördereinheit 3 ist ein Abgabesensor 20 zum Überwachen der Menge des aus dem Behälter 2 abgegebenen Schüttguts vorgesehen. Der Abgabesensor 20 ist als Schüttgutmangelschalter ausgeführt. Der Abgabesensor 20 umfasst eine um eine Schwenkachse 21 schwenkbare Klappe 22 sowie einen die Klappe 22 erkennenden induktiven Näherungsschalter 23. An einer dem Näherungsschalter 23 zugewandten Unterseite weist die Klappe 22 ein Distanzelement 24 in Form einer Anschlagschraube auf, um eine mechanische Berührung des Näherungsschalters 23 durch die Klappe 22 auszuschließen.

Die Vorrichtung 1 umfasst ferner eine Regelungseinheit 26, die mit dem Antrieb 16 und mit dem Abgabesensor 20 in Signalverbindung steht. Die Signalverbindung kann mittels einer schematisch angedeuteten Signalleitung 27 erfolgen. Die Signalverbindung kann aber auch kabellos, insbesondere durch Funk, erfolgen. Aus Darstellungsgründen ist die Signalverbindung zwischen der Regelungseinheit 26 und dem Abgabesensor 20 nicht dargestellt.

Nachfolgend wird ein Verfahren zur Handhabung und Abgabe von Schüttgut näher erläutert. Schüttgut wird über die Öffnung 8 in den Behälter 2 geladen. In dem Behälter 2 kann das Schüttgut bevorratet sein. Zur Abgabe des Schüttguts aus dem Behälter 2 wird das Entlastungselement 11 mittels des Antriebs 16, also von dem gegenläufig angetriebenen Unwuchtmotoren erzeugten Linearschwingung, entlang der Auslenkungsrichtung 17 linear angetrieben. Das Entlastungselement 11 folgt einer linearen Schwingungsbewegung 17. Das Entlastungselement 11 ist elastisch an dem Behälter 2 gehalten. Die lineare Schwingungsbewegung 17 des Entlastungselements 11 bewirkt, dass bei einer Aufwärtsbewegung verklebtes Schüttgut mit dem Scheitel 14 des V aufgeschnitten und bei einer nachfolgenden Abwärtsbewegung mit den gespreizten Schenkeln des V nach unten entlang der Behälterlängsachse 4 durch die Abgabeöffnung 6 auf die Fördereinheit 3 abgegeben wird. Auf der Fördereinheit 3 angeordnetes Schüttgut wird entlang der Förderrichtung 25 abtransportiert. In Abhängigkeit der auf der Fördereinheit 3 angeordneten Schüttgutmenge wird die Klappe 22 des Abgabesensors 20 um die horizontale Schwenkachse 21 geschwenkt. Sobald der Schwenkwinkel einen Mindest-Schwenkwinkel unterschreitet, ist eine vorgebbare Mindestmenge von abzugebendem Schüttgut nicht erreicht. Der Abgabesensor 20 veranlasst ein Stellsignal, das an die Regelungseinheit 26 übermittelt wird. Die Regelungseinheit 26 kann ein Stellsignal an den Antrieb 16 übermitteln, um den Antrieb zu starten und/oder Amplitude und/oder Frequenz der Linearschwingung derart zu beeinflussen, dass die Menge des abgegebenen Schüttguts ansteigt. Dadurch ist eine mengengeregelte Abgabe von Schüttgut aus dem Behälter 2 ermöglicht.

Es ist zusätzlich möglich, die Fördereinheit 3 mit der Regelungseinheit 26 in Signalverbindung zu setzen. Dadurch kann die Fördergeschwindigkeit entlang der Förderrichtung beeinflusst werden.

Solange die angegebene Menge des Schüttguts ausreichend ist, kann der Antrieb 16 deaktiviert sein. Insbesondere kann der Antrieb 16 zum Antreiben des Entlastungselements 11 nur dann aktiviert werden, wenn er durch den Abgabesensor 20 dadurch veranlasst wird.

## Patentansprüche

1. Vorrichtung für konglomerierende Schüttgüter umfassend
a. einen Behälter (2) mit einer Abgabeöffnung (6) zum Abgeben von Schüttgut aus dem Behälter (2),
b. ein in dem Behälter (2) angeordnetes Entlastungselement (11) zum Entlasten konglomerierten Schüttguts,
c. einen mit dem Entlastungselement (11) verbundenen Antrieb (16),
**dadurch gekennzeichnet, dass**
d. die Abgabeöffnung (6) genau so groß ist wie eine Grundfläche des Behälters (2).

2. Vorrichtung gemäß Anspruch 1, **dadurch gekennzeichnet, dass** das Entlastungselement (11) mit mindestens einem Aufhängungselement (12) elastisch mit dem Behälter (5) verbunden ist.

3. Vorrichtung gemäß einem der vorstehenden Ansprüche **dadurch gekennzeichnet, dass** das Entlastungselement (11) balkenförmig ausgeführt ist, wobei eine Balkenlängsachse (13) insbesondere parallel zu der Abgabeöffnung (6) angeordnet ist.

4. Vorrichtung gemäß Anspruch 3, **dadurch gekennzeichnet, dass** das Entlastungselement (11) einen offenen Profilquerschnitt aufweist, der insbesondere als ein der Abgabeöffnung (6) geöffnetes V ausgeführt ist.

5. Vorrichtung gemäß einem der vorstehenden Ansprüche, **gekennzeichnet durch** ein Verbindungselement (15) zum unmittelbaren Verbinden des Antriebs (16) mit dem Entlastungselement (11).

6. Vorrichtung gemäß einem der vorstehenden Ansprüche, **dadurch gekennzeichnet, dass** der Antrieb (16) zwei Unwuchtmotoren (19) aufweist.

7. Vorrichtung gemäß einem der vorstehenden Ansprüche, **gekennzeichnet durch** einen Füllstandssensor (10), der insbesondere als Radarsonde ausgeführt ist.

8. Vorrichtung gemäß einem der vorstehenden Ansprüche, **gekennzeichnet durch** eine Fördereinheit (3) zum Abfördern des aus dem Behälter (2) abgegebenen Schüttguts.

9. Vorrichtung gemäß Anspruch 8, **dadurch gekennzeichnet, dass** die Fördereinheit (3) unterhalb der Abgabeöffnung (6) angeordnet ist.

10. Vorrichtung gemäß einem der vorstehenden Ansprüche, **gekennzeichnet durch** einen Abgabesensor (20) zum Überwachen der Menge des aus dem Behälter (2) abgegebenen Schüttguts.

11. Vorrichtung gemäß Anspruch 10, **dadurch gekennzeichnet, dass** der Abgabesensor (20) als Schüttgutmangelschalter ausgeführt ist und insbesondere eine um eine Schwenkachse (21) schwenkbare Klappe (22) sowie einen die Klappe (22) erkennenden Näherungsschalter (23) aufweist.

12. Vorrichtung gemäß Anspruch 10 oder 11, **dadurch gekennzeichnet, dass** der Abgabesensor (20) ein Distanzelement (24) aufweist.

13. Vorrichtung gemäß einem der vorstehenden Ansprüche, **dadurch gekennzeichnet, dass** eine Seitenwand (5) des Behälters (6) in einer Ebene senkrecht zu einer Behälterlängsachse (4) eine knickfreie Kontur aufweist.

14. Vorrichtung gemäß einem der vorstehenden Ansprüche, **gekennzeichnet durch** eine Regelungseinheit (26) zur geregelten, insbesondere zur mengengeregelten, Abgabe von Schüttgut aus dem Behälter (2), wobei die Regelungseinheit (26) insbesondere mit dem Antrieb (16) und mit einem Abgabesensor (20) in Signalverbindung steht.

## Claims

1. Device for conglomerating bulk materials, comprising
a. a container (2) having a discharge opening (6) for discharging bulk materials out of the container (2),
b. a relief element (11) arranged in the container (2) for relieving conglomerating bulk material,
c. a drive (16) connected to the relief element (11),
**characterized in that**
d. the discharge opening (6) is exactly as large as a base area of the container (2).

2. Device according to Claim 1, **characterized in that** the relief element (11) is connected elastically to the container (5) by at least one suspension element (12).

3. Device according to one of the preceding claims, **characterized in that** the relief element (11) is bar-shaped, wherein a bar longitudinal axis (13) is in particular arranged parallel to the discharge opening (6).

4. Device according to Claim 3, **characterized in that** the relief element (11) has an open profile cross section which in particular is designed as a V open towards the discharge opening (6).

5. Device according to one of the preceding claims, **characterized by** a connecting element (15) for a direct connection of the drive (16) to the relief element (11).

6. Device according to one of the preceding claims, **characterized in that** the drive (16) has two unbalance motors (19).

7. Device according to one of the preceding claims, **characterized by** a level sensor (10), which in particular is designed as a radar probe.

8. Device according to one of the preceding claims, **characterized by** a conveying unit (3) for conveying away the bulk material discharged from the container (2).

9. Device according to Claim 8, **characterized in that** the conveying unit (3) is arranged underneath the discharge opening (6).

10. Device according to one of the preceding claims, **characterized by** a discharge sensor (20) for monitoring the quantity of bulk material discharged from the container (2).

11. Device according to Claim 10, **characterized in that** the discharge sensor (20) is designed as a bulk material deficiency switch and in particular has a flap (22) that can be pivoted about a pivot axis (21) and a proximity switch (23) detecting the flap (22).

12. Device according to Claim 10 or 11, **characterized in that** the discharge sensor (20) has a spacer element (24).

13. Device according to one of the preceding claims, **characterized in that** a side wall (5) of the container (6) has a kink-free contour in a plane perpendicular to a container longitudinal axis (4).

14. Device according to one of the preceding claims, **characterized by** a control unit (26) for the controlled, in particular quantity-controlled, discharge of bulk material out of the container (2), wherein the control unit (26) in particular has a signal connection to the drive (16) and to a discharge sensor (20).

## Revendications

1. Dispositif pour produits en vrac ayant tendance à s'agglomérer, comprenant
a. un récipient (2) comportant une ouverture de distribution (6) destinée à la distribution des produits en vrac à partir du récipient (2),
b. un élément de décharge (11) disposé dans le récipient (2) pour la décharge de produits en vrac ayant tendance à s'agglomérer,
c. un entraînement (16) relié à l'élément de décharge (11),
**caractérisé en ce que**
d. l'ouverture de distribution (6) a la même taille que le fond du récipient (2).

2. Dispositif selon la revendication 1, **caractérisé en ce que** l'élément de décharge (11) est relié élastiquement au récipient (5) par au moins un élément de suspension (12).

3. Dispositif selon l'une des revendications précédentes, **caractérisé en ce que** l'élément de décharge (11) est réalisé sous la forme d'une poutre, un axe longitudinal de poutre (13) étant disposé en particulier parallèlement à l'ouverture de distribution (6).

4. Dispositif selon la revendication 3, **caractérisé en ce que** l'élément de décharge (11) comporte une section transversale de profil ouverte qui est réalisée en particulier sous la forme d'un V ouvert à l'ouverture de distribution (6).

5. Dispositif selon l'une des revendications précédentes, **caractérisé par** un élément de liaison (15) destiné à relier directement l'entraînement (16) à l'élément de décharge (11).

6. Dispositif selon l'une des revendications précédentes, **caractérisé en ce que** l'entraînement (16) comporte deux moteurs à balourds (19).

7. Dispositif selon l'une des revendications précédentes, **caractérisé par** un capteur de niveau (10) qui est réalisé en particulier sous la forme d'une sonde radar.

8. Dispositif selon l'une des revendications précédentes, **caractérisé par** une unité de transport (3) destinée à évacuer le produit en vrac du récipient (2).

9. Dispositif selon la revendication 8, **caractérisé en ce que** l'unité de transport (3) est disposée sous l'ouverture de distribution (6).

10. Dispositif selon l'une des revendications précédentes, **caractérisé par** un capteur de distribution (20) destiné à surveiller la quantité de produits en vrac distribuée à partir du récipient (2).

11. Dispositif selon la revendication 10, **caractérisé en ce que** le capteur de distribution (20) est réalisé sous la forme d'un interrupteur de pénurie de produits en vrac et comporte en particulier un volet (22) pouvant pivoter autour d'un axe de pivotement (21) et un détecteur de proximité (23) qui détecte le volet (22).

12. Dispositif selon la revendication 10 ou 11, **caractérisé en ce que** le capteur de distribution (20) comporte un élément d'espacement (24).

13. Dispositif selon l'une des revendications précédentes, **caractérisé en ce qu'**une paroi latérale (5) du récipient (6) présente un contour sans pli dans un plan perpendiculaire à un axe longitudinal du récipient (4).

14. Dispositif selon l'une des revendications précédentes, **caractérisé par** une unité de régulation (26) destinée à la distribution régulée, en particulier à quantité régulée, de produits en vrac à partir du récipient (2), l'unité de régulation (26) étant en liaison de signal en particulier avec l'entraînement (16) et avec un capteur de distribution (20).
